# EUROPEAN PATENT APPLICATION

(11) **EP 4 538 244 A1**
(43) Date of publication of application: **16.04.2025**
(21) Application number: 23819603.4
(22) Date of filing: 16.05.2023
(51) Int. Cl.: C03C 13/04, G02B 6/02

(54) **GLASS MATERIAL AND OPTICAL FIBER**

(30) Priority: 10.06.2022 JP 2022094169
(71) Applicant: SUMITOMO ELECTRIC INDUSTRIES, LTD., Osaka-shi, Osaka 541-0041 (JP)
(72) Inventor: SATO Shin, Osaka-shi, Osaka 541-0041 (JP); HASEGAWA Takemi, Osaka-shi, Osaka 541-0041 (JP); ISHIKAWA Shinji, Osaka-shi, Osaka 541-0041 (JP)
(74) Representative: TBK
(86) International application number: PCT/JP2023/018317
(87) International publication number: WO 2023/238619

(57) **Abstract**

This glass material is configured from silica glass and contains a halogen element, wherein the glass material contains at least one of bromine and iodine, and the concentration ratio of halogen molecules X₂ and halogen ions X⁻ satisfies [X⁻]/[X₂] ≥ 1.

## Description

### TECHNICAL FIELD

The present disclosure relates to a glass material and an optical fiber. This application claims priority based on Japanese Patent Application No. 2022-094169 filed on June 10, 2022, and the entire contents of the Japanese patent application are incorporated herein by reference.

### BACKGROUND ART

Bromine and iodine can be used as upper dopants to increase the refractive index of the glass. Patent literature 1 and 2 disclose optical fibers in which bromine and iodine are added to the core.

### CITATION LIST

### PATENT LITERATURE

Patent literature 1: U.S. Patent Application Publication No. 2020-0087195
Patent literature 2: U.S. Patent Application Publication No. 2020-0049881

### SUMMARY OF THE INVENTION

A glass material according to an aspect of the present disclosure comprises a silica-based glass and containing a halogen element. The glass material contains at least one of bromine and iodine, and a concentration ratio of a halogen ion X⁻ to a halogen molecule X₂ satisfies [X⁻]/[X₂] ≥ 1.

An optical fiber according to an aspect of the present disclosure includes a core comprising a silica-based glass and containing a halogen element; and a cladding comprising a silica-based glass and surrounding the core. The core contains at least one of bromine and iodine, and a concentration ratio of a halogen ion X⁻ to a halogen molecule X₂ in the core satisfies [X⁻]/[X₂] ≥ 1.

### BRIEF DESCRIPTION OF THE DRAWINGS

FIG. 1 is a cross-sectional view showing an optical fiber according to an embodiment.
FIG. 2 is a graph showing the relationship between the concentration ratio and the transmission loss.
FIG. 3 is a graph showing the relationship between the concentration ratio and the transmission loss.
FIG. 4 is a graph showing the relationship between the concentration ratio and the transmission loss.
FIG. 5 is a graph showing the relationship between the concentration ratio and the transmission loss.

### DETAILED DESCRIPTION

### [Problems to be Solved by Present Disclosure]

Bromine and iodine have higher rates of increase in refractive index per addition amount (% by mass) than fluorine and chlorine. Thus, a glass material having the same refractive index can be obtained with low concentrations of the additives, and the influence of other impurities generated in the addition process can be reduced. On the other hand, halogen molecules in which halogen elements are bonded to each other may cause absorption loss in short wavelength, that is, in the wavelength ranges of ultraviolet and visible light. Thus, the use of the glass material in the wavelength ranges of ultraviolet and visible light is limited.

Also in the optical fiber, the tail of the absorption loss due to the halogen molecules affects the transmission wavelength band. Further, if glass defects are generated due to the release of halogen ions from bonds, the tail of the absorption due to glass defects also affects the transmission wavelength band. As a result, transmission loss may increase.

The object of the present disclosure is to provide glass materials and optical fibers with low absorption in the wavelength ranges of ultraviolet and visible light.

### [Advantageous Effects of Present Disclosure]

According to the present disclosure, a glass material and an optical fiber having low absorption in the wavelength ranges of ultraviolet and visible light can be provided.

### [Description of Embodiments of the Present Disclosure]

First, embodiments of the present disclosure will be listed and described.
(1) A glass material according to an aspect of the present disclosure comprises a silica-based glass and containing a halogen element. The glass material contains at least one of bromine and iodine, and a concentration ratio of a halogen ion X⁻ to a halogen molecule X₂ satisfies [X⁻]/[X₂] ≥ 1. This glass material has low absorption in the wavelength ranges of ultraviolet and visible light.
(2) In the above (1), the concentration ratio of the halogen ion X⁻ to the halogen molecule X₂ may satisfy [X⁻]/[X₂] ≥ 9. In this case, the absorption in the wavelength ranges of ultraviolet and visible light is further reduced.
(3) In the above (1) or (2), the glass material may have a relative refractive index difference of -0.1% to 0.3% with respect to a refractive index of silica glass. When this glass material is used for forming the core, it is possible to suppress excessive addition of the downdopant to the cladding.
(4) The glass material according to any one of (1) to (3) may include two or more halogen elements. In this case, the inclusion of a large amount of a specific halogen element is suppressed. Thus, the specific halogen element is prevented from reacting with other doped elements to form impurities.
(5) In the glass material of (4), the two or more halogen elements may be each present in a mass fraction of 50 ppm or more. In this case, the specific halogen element is further prevented from reacting with other doped elements to form impurities.
(6) In the glass material of (4), the two or more halogen elements may be each present in a mass fraction of 500 ppm or more. In this case, the specific halogen element is further prevented from reacting with other doped elements to form impurities.
(7) In the glass material according to any one of (1) to (6), silica glass may be present in a mass fraction of 90% or more. In this case, the optical characteristics are prevented from being adversely affected.
(8) An optical fiber according to an aspect of the present disclosure includes a core comprising a silica-based glass and containing a halogen element; and a cladding comprising a silica-based glass and surrounding the core. The core contains at least one of bromine and iodine, and a concentration ratio of a halogen ion X⁻ to a halogen molecule X₂ in the core satisfies [X⁻]/[X₂] ≥ 1. This optical fiber has low absorption in the wavelength ranges of ultraviolet and visible light.

### [Details of Embodiments of Present Disclosure]

Specific examples of the glass material and the optical fiber of the present disclosure will be described below with reference to the drawings. It is noted that, the present invention is not limited to these examples, but is defined by the scope of the claims, and is intended to include all modifications within the meaning and scope equivalent to the scope of the claims. In the description of the drawings, the same elements are denoted by the same reference numerals, and redundant description will be omitted.

### (Glass Material)

The glass material according to the embodiment is, for example, optical glass. More specifically, the glass material is, for example, a glass material for optical fiber, and is used for forming a core of optical fiber. The glass material comprises a silica-based glass which contains a silica glass as a main component. The glass material further contains elements other than silicon (Si) and oxygen (O) constituting silica glass.

The glass material contains a halogen element X. The halogen element X is any one of fluorine (F), chlorine (Cl), bromine (Br), and iodine (I). The glass material may contain a plurality of kinds of halogen elements. The glass material contains at least one of bromine and iodine.

The concentration of the halogen element X contained in the glass material may be 50 ppm or more, 500 ppm or more, or 1000 ppm or more in mass ratio. This reduces the amount of change in the viscosity of the glass caused by the change in the concentration of the doped elements, and thus reduces the variation in the optical characteristics of the glass. The concentration of the halogen element X contained in the glass material may be 50000 ppm or less in mass ratio. This can suppress the influence of the change in optical characteristics due to the addition of a large amount to the glass material, and the glass material having optical characteristics close to those of silica glass can be obtained. The above concentration range is substantially the same in any case where the halogen element X is Cl, F, Br, or I. That is, when two or more halogen elements X are contained in the glass material, the concentration of each halogen element X may be set within the above range. Here, the mass ratio means mass fraction.

The glass material may contain two or more kinds of halogen elements X, or may contain three or more kinds of halogen elements X. When a large amount of one specific kind of halogen element X is added to the glass material, the halogen element X react with other doped elements such as an alkali metal element, for example, and may be transferred to another substance phase to become impurities. The generation of impurities affects optical characteristics, and in particular, light absorption in the ultraviolet region may increase. When the glass material contains a plurality of kinds of halogen elements X, the concentration of each halogen element X required for realizing a desired refractive index can be reduced. This can suppress the formation of impurities.

In the glass material for optical fiber, when other substance phases are generated in the process of fiberization, the hardness in the glass becomes non-uniform, and as a result, the target fiber diameter and refractive index profile cannot be realized. Thus, it is important to suppress the concentration of each halogen element X in order to suppress the decrease in the yield of the optical fiber.

The relative refractive index difference Δ of the glass material with respect to the refractive index of pure silica glass (SiO₂, that is, silica glass) may be -0.1% to 0.3%, may be 0% to 0.3%, and may be 0.1% to 0.3%. When such a glass material is used for forming the core, it is possible to suppress excessive addition of the downdopant such as F to the cladding. Thus, increase in transmission loss due to the increase in the concentration of the additive can be suppressed.

Two or more halogen elements X among Cl, F, Br, and I may be added with each mass ratio of 500 ppm or more while keeping the relative refractive index difference of the glass material within the above range. Three or more halogen elements X may be added with each mass ratio of 500 ppm or more. Here, the mass ratio means mass fraction.

The glass material may further contain an element that tends to become a cation, such as an alkali metal element, an alkaline earth metal element, a group 13 element, or a group 14 element. Examples of the alkali metal element include lithium (Li), sodium (Na), and potassium (K). Examples of the alkaline earth metal element include magnesium (Mg), calcium (Ca), strontium (Sr), and barium (Ba). Examples of the group 13 element include boron (B), aluminum (Al), gallium (Ga), and indium (In). Examples of the group 14 element include germanium (Ge), tin (Sn), and lead (Pb).

When the glass material contains a cation, a monovalent anion X⁻ of the halogen element X is easily generated as described below. This produces an effect of easily suppressing the generation of halogen molecule X₂. On the other hand, if phase separation of the additive substance occurs due to the addition of multiple elements, optical characteristics are adversely affected. Thus, the ratio of silica glass which is the main component may be 90% or more, 95% or more, or 98% or more in mass ratio.

The concentrations of the halogen molecule X₂ and the halogen ion X⁻ are calculated by using, for example, X-ray photoelectron spectrometry (XPS). In XPS, it is possible to capture a change in the valence state of elements. As for I, a peak derived from I⁻ is observed between 618 and 620 eV, and a peak derived from I₂ is observed between 620 and 621 eV. As for Br, a peak derived from Br⁻ is observed between 70 and 72 eV, and a peak derived from Br₂ is observed between 68 and 69 eV.

These peaks are fitted with Gaussian functions, and the concentration ratio (molar ratio) is defined from the area intensity ratio of the obtained fitting functions. The concentration ratio of the halogen ion X⁻ of the same halogen element X as the halogen molecule X₂ to the halogen molecule X₂ satisfies [X⁻]/[X₂] ≥ 1 regardless of the element. The concentration ratio may satisfy [X⁻]/[X₂] ≥ 9, may satisfy [X⁻]/[X₂] ≥ 90, and may satisfy [X⁻]/[X₂] ≥ 900. These concentration ratios also affect the absorption in the ultraviolet region. By increasing the ratio of the concentration of the halogen ion X⁻, a glass material having low absorption in a wide wavelength range can be produced. By forming an optical fiber using this glass material, the transmission loss of the optical fiber can be reduced. Further, when the glass material contains two or more halogen elements, it is necessary that at least one kind of element satisfies the above-described concentration ratio.

The glass material is synthesized by using a plasma melting method or the like. In order to suppress the generation of the halogen molecule X₂, a method capable of generating halogen ion X⁻ may be used. In order to generate halogen ion X⁻, addition by high pressure application may be performed.

### (Optical Fiber)

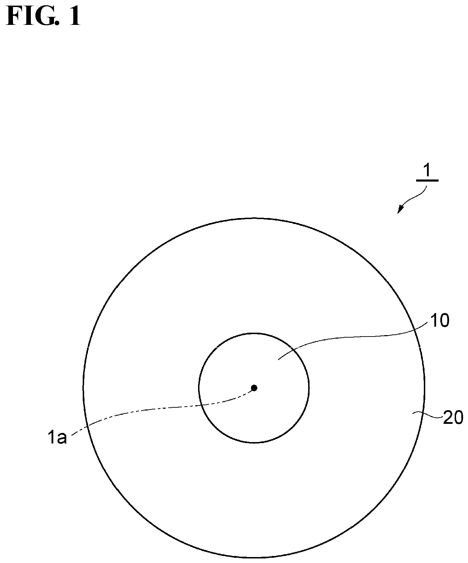

FIG. 1 is a cross-sectional view of an optical fiber according to an embodiment. An optical fiber 1 according to the embodiment contains a core 10 extending along a central axis 1a and a cladding 20 surrounding core 10. Optical fiber 1 is formed using the glass material according to the embodiment. More specifically, core 10 is formed using the glass material according to the embodiment. Cladding 20 is made of a silica-based glass which contains silica glass as a main component.

Table 1 shows the relationship between the concentration ratios and the transmission losses.

**[Table 1]**

| [Cl⁻]/[Cl₂] | Transmission Loss [dB/km] | [F⁻]/[F₂] | Transmission Loss [dB/km] | [Br⁻]/[Br₂] | Transmission Loss [dB/km] | [I⁻]/[I₂] | Transmission Loss [dB/km] |
|---|---|---|---|---|---|---|---|
| 0.02 | 0.16 | 0.01 | 0.17 | 0.03 | 0.16 | 0.01 | 0.17 |
| 0.1 | 0.161 | 0.7 | 0.155 | 0.45 | 0.158 | 0.43 | 0.175 |
| 1 | 0.153 | 1 | 0.1525 | 1 | 0.153 | 0.99 | 0.158 |
| 4 | 0.1525 | 5.1 | 0.1515 | 2.1 | 0.1525 | 3.1 | 0.156 |
| 10 | 0.152 | 10 | 0.152 | 10 | 0.152 | 10 | 0.157 |
| 43 | 0.152 | 25 | 0.1515 | 45 | 0.151 | 40 | 0.155 |
| 100 | 0.151 | 100 | 0.1495 | 100 | 0.15 | 100 | 0.152 |
| 185 | 0.15 | 235 | 0.15 | 214 | 0.148 | 235 | 0.149 |
| 512 | 0.1505 | 604 | 0.149 | 512 | 0.1485 | 604 | 0.148 |

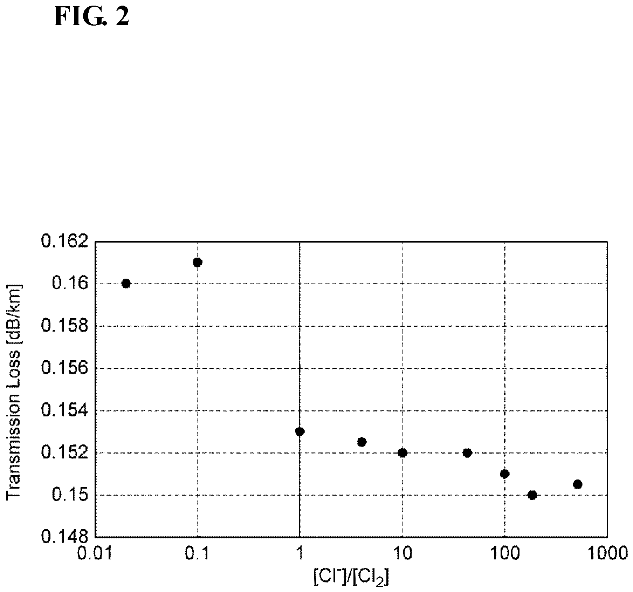

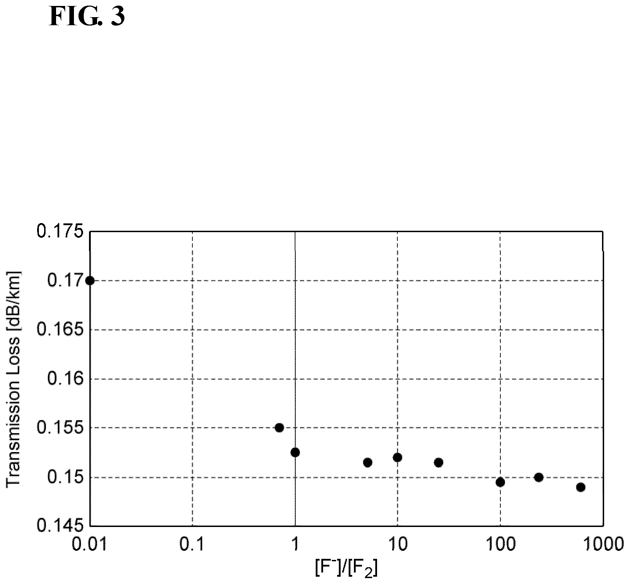

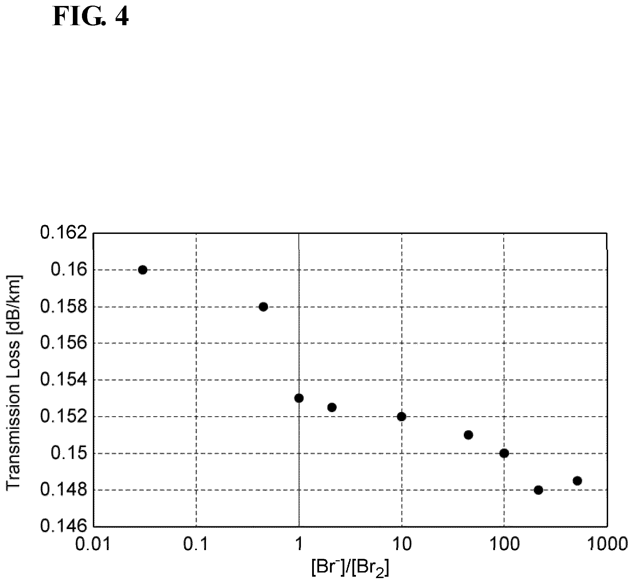

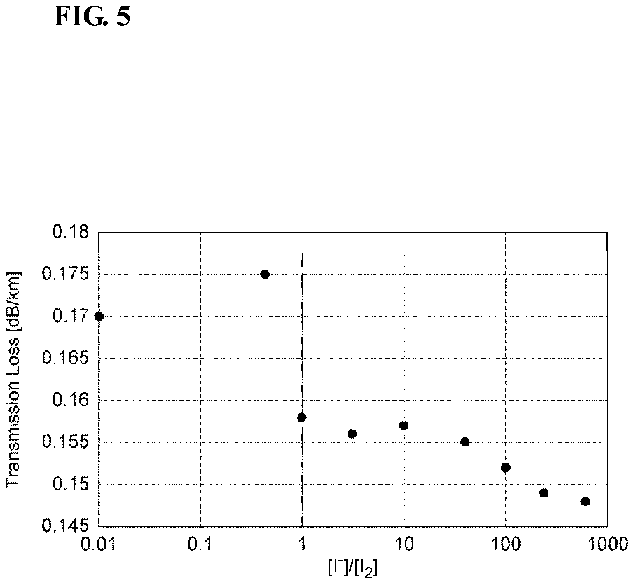

FIG. 2 to FIG. 5 are graphs each illustrating the relationship between the concentration ratio and the transmission loss. In FIG. 2, the case of chlorine is shown. In FIG. 3, the case of fluorine is shown. In FIG. 4, the case of bromine is shown. In FIG. 5, the case of iodine is shown. As shown in Table 1 and FIG. 2 to FIG. 5, it is understood that the transmission loss tends to decrease as the concentration ratio increases. When [X⁻]/[X₂] ≥ 1, it can be confirmed that the transmission loss is suppressed in any halogen element.

While the embodiments have been described, the present disclosure is not necessarily limited to the above-described embodiments and modifications, and various changes can be made without departing from the scope of the present disclosure.

### REFERENCE SIGNS LIST

1 optical fiber
1a central axis
10 core
20 cladding

## Claims

1. A glass material comprising a silica-based glass and containing a halogen element,
wherein the glass material contains at least one of bromine and iodine, and
a concentration ratio of a halogen ion X⁻ to a halogen molecule X₂ satisfies [X⁻]/[X₂] ≥ 1.

2. The glass material according to claim 1,
wherein the concentration ratio of the halogen ion X⁻ to the halogen molecule X₂ satisfies [X⁻]/[X₂] ≥ 9.

3. The glass material according to claim 1 or 2,
wherein the glass material has a relative refractive index difference of -0.1% to 0.3% with respect to a refractive index of silica glass.

4. The glass material according to any one of claims 1 to 3,
wherein the halogen element includes two or more halogen elements.

5. The glass material according to claim 4,
wherein the two or more halogen elements are each present in a mass fraction of 50 ppm or more.

6. The glass material according to claim 4,
wherein the two or more halogen elements are each present in a mass fraction of 500 ppm or more.

7. The glass material according to any one of claims 1 to 6,
wherein silica glass is present in a mass fraction of 90% or more.

8. The glass material according to any one of claims 4 to 6,
wherein the two or more halogen elements are each present in a mass fraction of 50,000 ppm or more.

9. The glass material according to any one of claims 1 to 8, further containing at least one of an alkali metal element, an alkaline earth metal element, a group 13 element, and a group 14 element.

10. The glass material according to any one of claims 1 to 9,
wherein the glass material has a relative refractive index difference of 0% to 0.3% with respect to a refractive index of silica glass.

11. The glass material according to any one of claims 1 to 10,
wherein the glass material has a relative refractive index difference of 0.1% to 0.3% with respect to a refractive index of silica glass.

12. The glass material according to any one of claims 1 to 11,
wherein the concentration ratio of the halogen ion X⁻ to the halogen molecule X₂ satisfies [X⁻]/[X₂] ≥ 90.

13. The glass material according to any one of claims 1 to 12,
wherein the concentration ratio of the halogen ion X⁻ to the halogen molecule X₂ satisfies [X⁻]/[X₂] ≥ 900.

14. The glass material according to any one of claims 1 to 13,
wherein the halogen element is fluorine, chlorine, bromine, or iodine.

15. An optical fiber comprising:
a core comprising a silica-based glass and containing a halogen element; and
a cladding comprising a silica-based glass and surrounding the core,
wherein the core contains at least one of bromine and iodine, and
a concentration ratio of a halogen ion X⁻ to a halogen molecule X₂ in the core satisfies [X⁻]/[X₂] ≥ 1.
